# EUROPEAN PATENT SPECIFICATION

(11) **EP 2 244 055 B1**
(45) Date of publication and mention of the grant of the patent: **29.05.2013**
(21) Application number: 10159846.4
(22) Date of filing: 14.04.2010
(51) Int. Cl.: G01B 9/02, G01B 11/00, G01B 11/14, G01S 17/66

(54) **Tracking type laser interferometer**
Laserinterferometer mit Nachverfolgung
Interféromètre laser de type suivi

(30) Priority: 14.04.2009 JP 2009097810
(43) Date of publication of application: 27.10.2010
(73) Proprietor: Mitutoyo Corporation, Kawasaki, Kanagawa 213-8533 (JP)
(72) Inventor: Tanimura, Yoshihisa, Ibaraki 305-0854 (JP); Nara, Masayuki, Ibaraki 305-0854 (JP)
(74) Representative: Skone James, Robert Edmund

(56) References cited:
- EP-A2- 1 895 266
- JP-A- 7 120 213
- US-A- 3 930 729
- US-A- 6 147 748

## Description

### BACKGROUND

### 1. Field of the Invention

The present invention relates to a tracking type laser interferometer and more particularly to an improvement in a tracking type laser interferometer which is suitable for use in a space correcting unit of a three-dimensional coordinate measuring machine, a tip locus history tracking unit such as a robot arm, a motion performance checking unit of a table in a machine tool or a tracking station constituting a non-orthogonal type coordinate measuring system and serves to measure a distance to a movable body (a target) of a space while carrying out tracking.

### 2. Description of the Related Art

There is known a tracking type laser interferometer for measuring a distance to a movable body (a target) of a space while carrying out tracking.

For example, Japanese Patent No. 2603429 has described a tracking type laser interferometer for measuring a relative displacement of a recursive retroreflector (a cat's eye reflector) to be a measuring reference and a recursive retroreflector to be a target.

As shown in Fig. 1, an apparatus described in Japanese Patent No. 2603429 includes a first recursive retroreflector 101 for reference which acts as a measuring reference, a second recursive retroreflector 102 for measurement which is provided on a movable body, a rotating portion 103 which is rotatable around X and Y axes passing through a center of the first recursive retroreflector 101 respectively, means for guiding a laser beam emitted from a laser beam source (not shown) to the rotating portion 103 irrespective of a rotation of the rotating portion 103, and an optical system constituted by a plurality of optical components which is fixedly provided in the rotating portion 103 (1/4 wave plates 104 and 105, prisms 106 to 110, and a polarizing beam splitter (PBS) 111).

The optical system has such a design that the laser beam guided to the rotating portion 103 is divided through the PBS 111 and one of the laser beams thus obtained by the division is caused to be incident on the first recursive retroreflector 101 via an optical path which is orthogonal to the X axis, and furthermore, the other laser beam is emitted as a measuring light on an extension of the optical path and is caused to be incident on the second recursive retroreflector 102, and lights reflected from the first and second recursive retroreflectors 101 and 102 can be obtained respectively.

In addition, there are provided a detecting portion (not shown) for detecting an amount of movement of the second recursive retroreflector 102 based on an interference of the two reflected lights, a 4-division photodiode (PD) 112 serving as a tracking position detecting unit on which a part of the light reflected from the second recursive retroreflector 102 is incident and which outputs a position signal corresponding to an amount of shift of an optical axis thereof, and a control unit (not shown) for controlling rotating positions around the X and Y axes of the rotating portion 103 so that the amount of shift is zero based on the position signal sent from the position detecting unit.

According to the tracking type laser interferometer described in Japanese Patent No. 2603429, even if a rotating center of the rotating portion 103 is shifted, a difference between a distance from the PBS 111 to the recursive retroreflector 101 for reference and a distance from the PBS 111 to the recursive retroreflector 102 for measurement is not changed. Therefore, it is possible to measure a displacement or position of a movable body provided with the recursive retroreflector 102 for measurement with high precision while tracking the movable body.

In the technique described in Japanese Patent No. 2603429, however, the following problem occurs.

There is used an interferometer for separating a reference light and a measuring light from each other at a right angle in the PBS 111 and superposing lights reflected from the first and second recursive retroreflectors 101 and 102 respectively through the PBS 111 again to bring an interference state and to measure a length. For this reason, an arrangement of optical components in the rotating portion 103 to be a gimbal mechanism which can be rotated around two axes is very complicated and the number of the components is large, and the apparatus is expensive.

An alignment adjustment of a central position of the first recursive retroreflector 101 and a laser beam disposed on the rotating portion 103 is very complicated and hard.

In the case in which the recursive retroreflector is a spherical cat's eye, it is a custom-made article formed by an optical material which is soft and has a refractive index of approximately two. For this reason, the recursive retroreflector is not generally put on the market and is thus expensive.

If a surface of the spherical cat's eye (a surface on a side where focal points are connected) has a slight scratch or dust, a reflected light is disturbed so that interference length measurement cannot be executed.

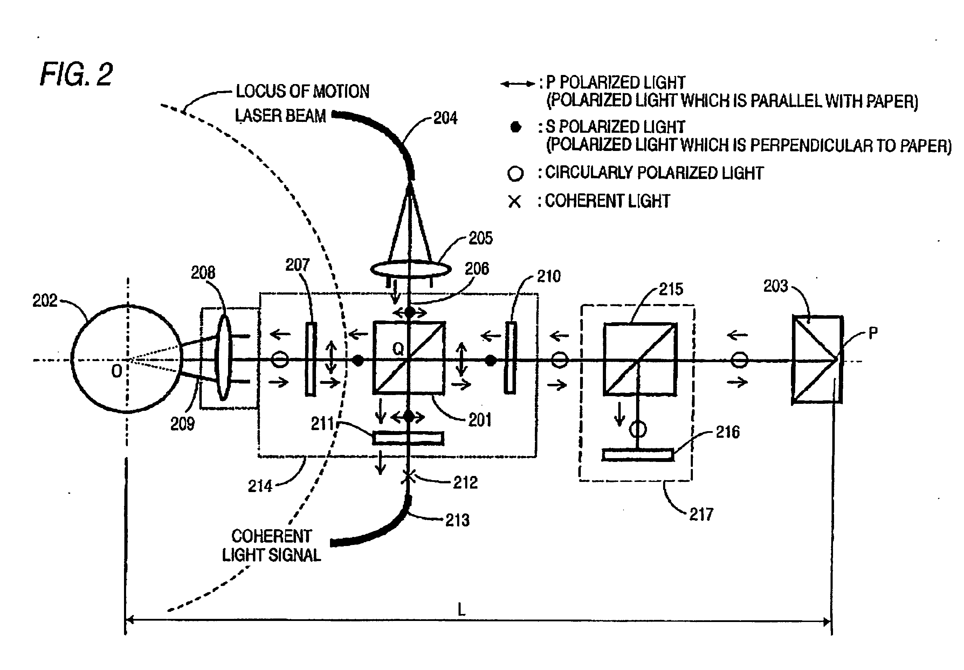

In order to solve the problems, US Patent No. 6147748 has achieved the same advantages as those in Japanese Patent No. 2603429 by using a laser interferometer having a different arrangement from that of Japanese Patent No. 2603429. Although a structure of an optical system in the apparatus is shown in Fig. 6 of the document, Fig. 2 schematically shows only a portion related to laser interference length measurement which is extracted.

The laser interferometer is characterized by a reference sphere 202, an objective lens 208, an interferometer body portion 214 surrounded by a broken line, and a measuring side recursive retroreflector (target) 203.

In Fig. 2, a tracking position detecting unit 217 constituted by a beam splitter 215 and a 4-division PD 216 serves to detect amounts of positional shift of the interferometer body portion 214 and the measuring side recursive retroreflector 203 in the laser interferometer and to carry out tracking through a control device (not shown).

A function of the apparatus in Fig. 2 will be described below in detail.

A laser beam emitted from a laser beam source (not shown) via a polarization maintaining fiber 204 passes through a lens 205 and is thus changed into a parallel light 206 having two linearly polarized lights (P and S polarized lights) which are orthogonal to each other, and the parallel light 206 is transmitted toward a PBS 201. The P polarized light which is parallel with a paper exactly passes through the PBS 201 so that a reference light of the interferometer is obtained.

On the other hand, the S polarized light having a vibration plane which is perpendicular to the paper is reflected by the PBS 201 and passes through a 1/4 wave plate 207, and is thus changed into a circularly polarized light and is diaphragmed by the lens 208 so that a position of a focal point thereof is placed on a center O of the reference sphere 202 or an outer surface. A light 209 reflected by a surface of the reference sphere 202 is changed into a parallel light through the lens 208 again and the parallel light is changed into the P polarized light when it passes through the 1/4 wave plate 207. The P polarized light passes through the PBS 201 and a 1/4 wave plate 210 and is transmitted toward the measuring side recursive retroreflector 203 in a state of the circularly polarized light. When a light reflected by the measuring side recursive retroreflector 203 passes through the 1/4 wave plate 210 again, it is changed into the S polarized light at this time and is reflected by the PBS 201 so that the measuring light of the interferometer is obtained.

When the reference light and the measuring light in the interferometer pass through a polarizing plate 211 in a superposing state, a coherent light 212 is obtained. The coherent light is propagated as a coherent light signal through an optical fiber 213 so that a result of the length measurement is output from electric equipment (not shown).

The laser interferometer shown in Fig. 2 has a great feature that a distance to be observed (a distance L from the center O of the reference sphere 202 to a point P of the measuring side recursive retroreflector 203) is not changed even if the interferometer body portion 214 is displaced in a direction along a laser beam (the same advantage as that in Japanese Patent No. 2603429). Moreover, an equivalent performance can be achieved with a simpler component structure as compared with the technique described in Japanese Patent No. 2603429.

However, the technique of US Patent No. 6147748 has the following problems.

In the case in which the laser beam is collected by the lens 208 so that the center O of the reference sphere 202 is set to be a focal point, it is apt to be influenced by a motion error of a rotating mechanism. In other words, when a position of the focal point of the measuring light is shifted from a position of the center O of the reference sphere 202 due to the motion error of the rotating mechanism, a wave surface of the reflected light 209 is disturbed. For this reason, S/N of a signal obtained by the coherent light 212 is reduced so that a displacement is hard to measure.

In the case in which a laser beam is collected by the lens 208 so that the outer surface of the reference sphere 202 is set to be the focal point, it is apt to be influenced by dust or refuse on the surface of the reference sphere 202. In other words, a beam diameter is reduced on the focal point. For this reason, the beam is apt to be influenced by a small scratch or dust.

The wave surface of the laser beam reflected by the reference sphere 202 is disturbed by an influence of the shift of the focal point in the lens 208. When a path for the laser beam is taken so that the laser beam is transmitted toward the measuring side recursive retroreflector (target) 203 after the reflection through the reference sphere 202, accordingly, the laser beam having the wave surface disturbed by the reflection through the reference sphere 202 is transferred to the measuring side recursive retroreflector 203 disposed in a distant place. Thus, an influence of diffraction or an aberration is increased.

In order to solve the problems, it is possible to propose a use, for the reference sphere, of a complete sphere fabricated by utilizing a transparent glass material as is suggested in Paragraph [0016] of Japanese Patent No. 2603429.

In the case in which a thin beam is incident on a reference sphere, however, it is apt to be influenced by refuse on an incidence plane. In the case in which a point reflection is carried out in the reference sphere, moreover, there is a problem in that the beam is apt to be influenced by a scratch on a surface of the reference sphere, and furthermore, is apt to be influenced by a local complete sphere error of the reference sphere.

### SUMMARY

In order to solve the conventional problems, it is an object of the invention to provide a tracking type laser interferometer which is influenced by refuse on an incidence plane with difficulty, is robust against a scratch on a surface of a reference sphere, and is influenced by a local complete sphere error of the reference sphere with difficulty.

According to an aspect of the invention, there is provided a tracking type laser interferometer including: a transparent reference sphere which is provided in a fixed position; a recursive retroreflector provided on a movable body; a carriage designed to be rotated around a center of the reference sphere; a length measuring unit fixedly provided on the carriage, including an optical system for reciprocating a laser beam between the recursive retroreflector and the reference sphere and serving to carry out a gauge interference over a distance between the recursive retroreflector and the reference sphere; a tracking position detecting unit fixedly provided on the carriage and serving to output a signal corresponding to an amount of shift between optical axes of lights which are incident on and reflected by the recursive retroreflector; and a controller for controlling the rotation of the carriage so that the amount of shift between the optical axes which is obtained by the tracking position detecting unit is zero, wherein a laser beam incident on the reference sphere is focused on the center of the reference sphere and is reflected by spherical surfaces on an incident side and an inside which is opposite thereto.

Besides, when the laser beam is to be reciprocated between the recursive retroreflector and the reference sphere, the laser beam may be transmitted toward the recursive retroreflector provided on the movable body earlier and the reflected laser beam may be transmitted toward the reference sphere.

According to the invention, a beam diameter of a light can maintain some range in an incidence on the reference sphere. Therefore, the light is influenced by refuse on an incidence plane with difficulty.

Moreover, the reflection is not carried out through a point but a surface in the reference sphere. Consequently, the light is robust against a scratch on a surface of the reference sphere so that it is also influenced by a local complete sphere error of the reference sphere with difficulty.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:

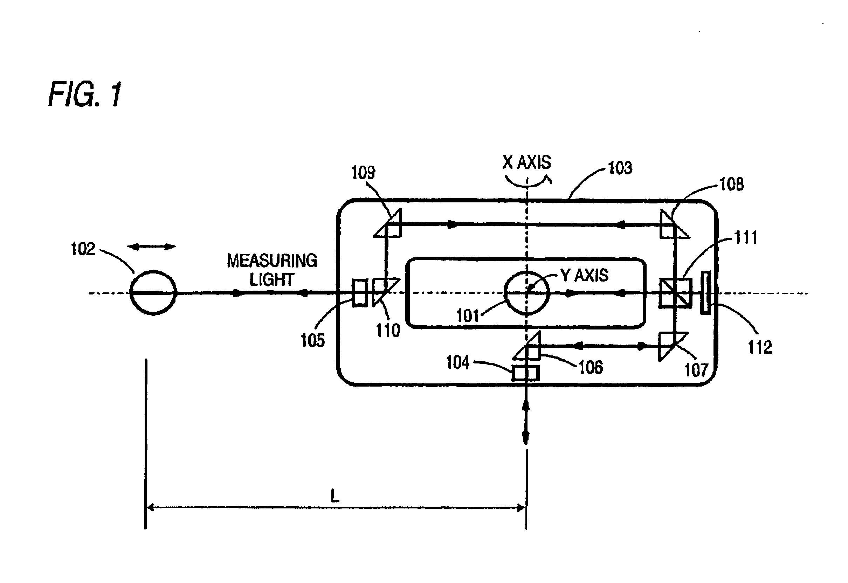

Fig. 1 is a view showing a main part of one related art;
Fig. 2 is a view showing a main part of another related art;
Fig. 3 is a perspective view showing a whole part of an exemplary embodiment according to the invention; and
Fig. 4 is a view showing an optical path with respect to a main part of the exemplary embodiment according to the invention.

### DETAILED DESCRIPTION OF THE INVENTION

An embodiment according to the invention will be described below in detail with reference to the drawings.

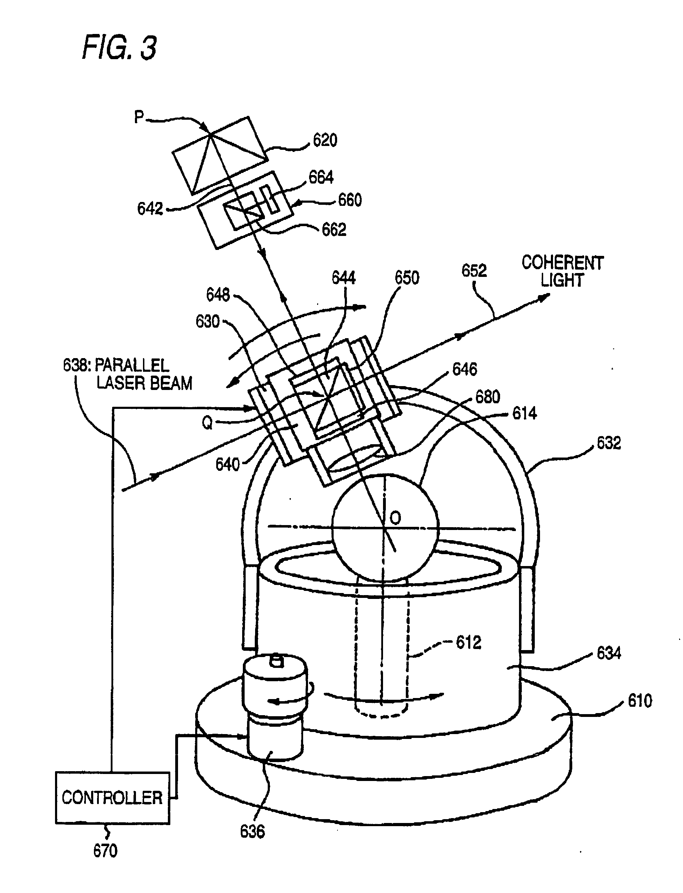

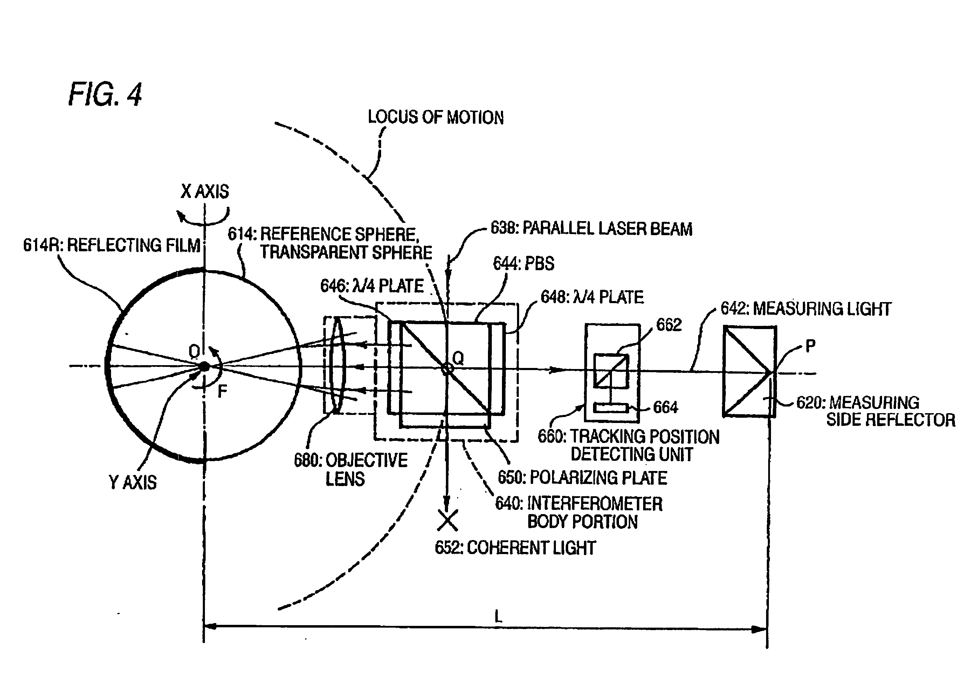

In the embodiment, as shown in Fig. 3 (a perspective view showing a whole part) and Fig. 4 (a view showing an optical path, illustrating a main part), a tracking type laser interferometer includes a reference sphere 614 which is fabricated by using a transparent glass material, and is secured to a strut 612 fixed firmly to a fixing table 610 and is thus provided in a fixed position, a measuring side reflector 620 which is constituted by a recursive retroreflector provided on a movable body, a carriage 630 designed to be rotated around X and Y axes shown in Fig. 4 with a center O of the reference sphere 614 set to be a center, an interferometer body portion 640 which is fixedly provided on the carriage 630, has an optical system (a PBS 644, λ/4 plates 646 and 648, and a polarizing plate 650) for reciprocating a laser beam (a measuring light) 642 between the measuring side reflector 620 and the reference sphere 614 and serves to carry out a gauge interference over a distance between the measuring side reflector 620 and the reference sphere 614, a tracking position detecting unit 660 (Fig. 4) fixedly provided on the carriage 630, serving to output a signal corresponding to an amount of shift between optical axes of lights which are incident on and reflected by the measuring side reflector 620, and constituted by a beam splitter 662 and a 4-division photodetector 664 which are the same as those in US Patent No. 6147748, for example, and a controller 670 for controlling the rotation of the carriage 630 so that the amount of shift between the optical axes which is obtained by the tracking position detecting unit 660 is zero. In the tracking type laser interferometer, as shown in detail in Fig. 4, a laser beam incident on the reference sphere 614 is focused on the center O of the reference sphere 614 by means of an objective lens 680 provided on the reference sphere 614 side of the interferometer body portion 640 and is reflected by a spherical surface opposed to an incident side of the laser beam.

By providing a hemispherical reflecting film 614R on a surface at a reflecting side of the reference sphere 614 as shown in Fig. 4, it is possible to increase a reflectance. In the case in which a whole spherical range is used, it is also possible to give reflection coating in approximately 30% of the whole sphere in order to maximize a final reflecting efficiency.

In the drawing, 632 denotes a circular frame over which the carriage 630 is caused to run and is moved by means of a motor (not shown) provided on a back side of the interferometer body portion 640, 634 denotes a cylindrical type rotating table to which the circular frame 632 is fixed, 636 denotes a motor for rotating the cylindrical type rotating table 634, 638 denotes a parallel laser beam which is incident on the interferometer body portion 640 from a laser beam source which is not shown, and 652 denotes a coherent light emitted from the interferometer body portion 640.

With the structure, the parallel light transmitted toward the reference sphere 614 is focused on the center of the reference sphere 614 by means of the objective lens 680 and is then reflected by an internal surface of the sphere, which is opposed to an incident side of the laser beam, and is thereafter returned again in a direction in which a light is incident. Since the reference sphere 614 takes the spherical shape, the parallel laser beam is reflected and returned in the same direction as the incident direction even if it is incident in every direction.

Since the other respects are the same as the technique described in US Patent No. 6147748, detailed description will be omitted.

For the measuring side reflector 620 to be a length measuring target, it is possible to utilize a corner cube prism or a cat's eye reflector of such a type that spheres or hemisphere formed in a refractive index of two are stuck together.

Moreover, the reflecting film 614R of the reference sphere 614 can also be omitted.

In the embodiment, a path for a laser beam is transmitted toward the measuring side reflector 620 earlier and is then transmitted toward the reference sphere 614 as shown in Fig. 4. Therefore, it is possible to use a clean plane wave for a light transmitted toward a distant place and to suppress an influence of a diffraction or an aberration, thereby carrying out measurement stably at a long distance. On the other hand, if the path for the laser beam is taken to be transmitted toward the measuring side reflector 620 after the reflection through the reference sphere 614, reversely, a laser beam having a wave surface disturbed by the reflection through the reference sphere 614 is transferred to the measuring side reflector 620 provided in the distant place. As a result, an influence of a diffraction or an aberration is increased.

A light collecting unit for carrying out focusing on the center O of the reference sphere 614 is not restricted to the objective lens 680.

## Claims

1. A tracking type laser interferometer comprising:
a transparent reference sphere (614) which is provided in a fixed position;
a recursive retroreflector (620) provided on a movable body;
a carriage (630) designed to be rotated around a center of the reference sphere;
a length measuring unit (640) fixedly provided on the carriage, including an optical system (644, 646, 648, 650) for reciprocating a laser beam (642) between the recursive retroreflector and the reference sphere and serving to carry out a gauge interference over a distance between the recursive retroreflector and the reference sphere;
a tracking position detecting unit (660) fixedly provided on the carriage and serving to output a signal corresponding to an amount of shift between optical axes of lights of the laser beam which are incident on and reflected by the recursive retroreflector; and
a controller (670) for controlling the rotation of the carriage so that the amount of shift between the optical axes which is obtained by the tracking position detecting unit is zero, **characterized in that**
the laser beam incident on an incident side of the reference sphere is focused on the center (0) of the reference sphere and is reflected by the spherical surface opposed to the incident side.

2. The tracking type laser interferometer according to claim 1, wherein
when the laser beam is to be reciprocated between the recursive retroreflector and the reference sphere, the laser beam is transmitted toward the recursive retroreflector provided on the movable body earlier and the reflected laser beam is transmitted toward the reference sphere.

## Patentansprüche

1. Laserinterferometer mit Nachlauf umfassend:
eine transparente Bezugsspähre (614), welche in einer fixierten Position vorgesehen ist.
einen auf einem beweglichen Körper vorgesehenen rekursiven Retroreflektor (620);
einen Schlitten (630), der gestaltet ist, um rings um den Mittelpunkt der Bezugssphäre zu rotieren;
eine Einheit (640) zur Längenmessung, welche fixiert an dem Schlitten vorgesehen ist, enthaltend ein optisches System (644, 646, 648, 650) zum Hin- und Herbewegen eines Laserstrahls (642), zwischen dem rekursiven Retroreflektor und der Bezugssphäre für den Zweck, eine Bezugsinterferenz über den Abstand zwischen dem rekursiven Retroreflektor und der Bezugsspähre auszuführen;
eine Einheit (660) zum Ermitteln der Nachlaufposition, welche fixiert auf dem Schlitten befestigt ist und dazu dient, ein Signal abzugeben, welches der Menge an Abweichung zwischen den optischen Achsen der Lichtstrahlen des Laserstrahls entsprechen, welche auf den Retroreflektor eingefallen und von demselben reflektiert worden sind; und
ein Steuergerät (670) zum Steuern der Rotation des Schlittens derart, dass die Menge an Abweichung Null ist, welche erhalten ist durch die Einheit zum Ermitteln einer Nachlaufposition, **dadurch gekennzeichnet, dass**
der auf der Einfallsseite der Bezugssphäre einfallende Laserstrahl auf den Mittelpunkt (0) der Bezugssphäre fokussiert ist und reflektiert wird durch die sphärische Oberfläche, welche der einfallenden Seite gegenüberliegt.

2. Laserinterferometer mit Nachlauf nach Anspruch 1, wobei
beim Hin- und Herschicken des Laserstrahls zwischen dem rekursiven Retroreflektor und der Bezugssphäre der Laserstrahl zum auf dem beweglichen Körper vorgesehen rekursiven Retroreflektor übermittelbar ist und der reflektierte Laserstrahl zur Bezugssphäre übermittelbar ist.

## Revendications

1. Interféromètre à laser du type à poursuite comportant :
une sphère de référence transparente (614) qui est mise en oeuvre sur une position fixe ;
un rétroréflecteur récurrent (620) mis en oeuvre sur un corps mobile ;
un chariot (630) conçu pour être mis en rotation autour d'un centre de la sphère de référence ;
un dispositif de mesure de longueur (640) mis en oeuvre de manière fixe sur le chariot, comprenant un système optique (644, 646, 648, 650) à des fins de mouvement de va-et-vient d'un faisceau laser (642) entre le rétroréflecteur récurrent et la sphère de référence et servant à effectuer une interférence d'étalonnage sur une distance entre le rétroréflecteur récurrent et la sphère de référence ;
une unité de détection de position de poursuite (660) mise en oeuvre de manière fixe sur le chariot et servant à émettre un signal correspondant à une quantité de décalage entre des axes optiques des lumières du faisceau laser qui sont incidentes sur et réfléchies par le rétroréflecteur récurrent ; et
un dispositif de commande (670) destiné à commander la rotation du chariot de sorte que la quantité de décalage entre les axes optiques qui est obtenue par l'unité de détection de position de poursuite est de zéro, **caractérisé en ce que**
le faisceau laser incident sur un côté incident de la sphère de référence est focalisé sur le centre (O) de la sphère de référence et est réfléchi par la surface sphérique opposée au côté incident.

2. Interféromètre à laser du type à poursuite selon la revendication 1, dans lequel
quand le faisceau laser doit être mis en mouvement de va-et-vient entre le rétroréflecteur récurrent et la sphère de référence, le faisceau laser est transmis vers le rétroréflecteur récurrent mis en oeuvre sur le corps mobile précédemment et le faisceau laser réfléchi est transmis vers la sphère de référence.
